# EUROPÄISCHE PATENTSCHRIFT

(11) **EP 3 959 961 B1**
(45) Veröffentlichungstag und Bekanntmachung des Hinweises auf die Patenterteilung: **22.05.2024**
(21) Anmeldenummer: 21170735.1
(22) Anmeldetag: 27.04.2021
(51) Int. Cl.: A01D 90/04, A01F 15/10

(54) **HALMGUTPRESSE MIT ENTNEHMBAREM SCHNEIDMODUL UND VERFAHREN ZUR HANDHABUNG EINES SOLCHEN ENTNEHMBAREN SCHNEIDMODULS**
BALER PRESS WITH REMOVABLE CUTTING MODULE AND METHOD FOR HANDLING SUCH A REMOVABLE CUTTING MODULE
PRESSE POUR PRODUITS DE RÉCOLTE À TIGES POURVU DE MODULE DE COUPE AMOVIBLE ET PROCÉDÉ DE MANIPULATION D'UN TEL MODULE DE COUPE AMOVIBLE

(30) Priorität: 26.08.2020 DE 102020122310
(43) Veröffentlichungstag der Anmeldung: 02.03.2022
(73) Patentinhaber: Rubenbauer, Georg, 95695 Mähring (DE)
(72) Erfinder: Rubenbauer, Georg, 95695 Mähring (DE)
(74) Vertreter: Benninger, Johannes

(56) Entgegenhaltungen:
- EP-A1- 3 053 430
- EP-B1- 2 659 761
- EP-B1- 2 939 521
- DE-A1- 3 821 717
- US-A- 4 133 258
- US-A1- 2013 316 770

## Beschreibung

Die vorliegende Erfindung betrifft eine landwirtschaftliche Halmgutpresse mit den Merkmalen des unabhängigen Anspruchs 1 zum Pressen von insbesondere quaderförmigen Ballen oder Großballen, die eine entnehmbare Messerkassette eines Schneidmoduls aufweist. Die Erfindung betrifft zudem ein Verfahren zur Handhabung eines aus einer landwirtschaftlichen Halmgutpresse entnehmbaren Schneidmoduls mit den Merkmalen des Verfahrensanspruchs 7.

In der landwirtschaftlichen Pflanzen- und Tierfutterproduktion fällt bei vielen Erntevorgängen verwertbares Halmgut an, so etwa Getreidestroh, Maisstroh oder Heu. Solches Halmgut bildet in den seltensten Fällen einen Abfallstoff, auch wenn es sich in manchen Verfahrensvarianten als sinnvoll erwiesen hat, das Getreidestroh als organisches Mulchmaterial auf dem Feld zu belassen. Dies betrifft etwa den Bereich der nicht wendenden oder sog. pfluglosen Bodenbearbeitung. Darüber hinaus kann Getreidestroh als vergärbare Beladung von Biogasanlagen und damit zur Energiegewinnung eingesetzt werden.

Normalerweise jedoch stellt das Halmgut einen Rohstoff dar, der in vielen landwirtschaftlichen Prozessketten benötigt wird. So kann Getreidestroh, das im Zusammenhang mit dem Mähdrusch abfällt, als Einstreu für Stalltiere benötigt werden, während Heu ein wertvolles Tierfutter für Weidetiere bilden kann, die als landwirtschaftliches Großvieh oftmals nicht auf die Weide gelangen, sondern im Stall gefüttert werden.

Während in herkömmlichen Prozessen der Heugewinnung das frisch gemähte Gras auf dem Feld getrocknet und anschließend mittels Ladewagen oder auf andere Weise geborgen wird, hat sich gezeigt, dass auf diese Weise sehr große Transport- und Lagervolumina benötigt werden, die durch Pressen des Heus deutlich reduziert werden können. Durch einen solchen Pressvorgang, der sinnvollerweise bereits auf dem Feld stattfindet, wird aus dem luft- und sonnengetrockneten Heu (oder auch aus Stroh) ein Stückgut gemacht, das durch einen solchen Verarbeitungs- und Umformungsvorgang viel leichter maschinell handhabbar und stapelbar wird und in fördertechnischer Hinsicht besser verarbeitet und gehandhabt werden kann.

Für die Handhabung der solchermaßen aus geerntetem Halmgut gebildeten Pressportionen oder Stückgüter werden im einfachsten Fall landwirtschaftliche Zugmaschinen mit frontseitig angebauten hydraulischen Hebevorrichtungen eingesetzt. Daneben haben sich sog. Hoflader bewährt und vielerorts durchgesetzt, die dann zum Einsatz kommen, wenn eine ausreichende Auslastung auf dem Feld und am Hof gegeben ist, d.h. wenn zahlreiche Einsatzmöglichkeiten zum Heben, Umsetzen, Stapeln und allgemein zum Handhaben von Heu- oder Strohballen vorhanden sind.

In der Frühphase der Entwicklung wurden zum Pressen von Halmgut stationäre Pressvorrichtungen eingesetzt, was jedoch nicht den Nachteil beheben konnte, dass weiterhin große Volumina an geerntetem Halmgut vom Feld zur Pressvorrichtung zu befördern waren. Aus diesem Grund wurden mobile Pressen entwickelt, die zunächst als angehängte und zapfwellenbetriebene Maschinen von landwirtschaftlichen Zugmaschinen auf das Feld gezogen wurden, um dort das getrocknete und normalerweise in Schwaden abgelegte Halmgut aufzunehmen und zu gepressten Einheiten zu verarbeiten. Diese Maschinentypen sind etwa als Niederdruck- oder als Mitteldruck-Aufsammelpressen bekannt und gebräuchlich geworden.

Nachdem sich zur Mitte des vergangenen Jahrhunderts allmählich der Mähdrusch mit dem einphasigen Schneiden und Ausdreschen von Getreidefrüchten durchsetzen konnte, fiel bei diesen Verarbeitungsvorgängen immer mehr Stroh an, das mittels verfügbarer Pressvorrichtungen verarbeitet werden konnte, was in der Folge zur Weiterentwicklung der bereits bekannten Niederdruck- und Mitteldruckpressen zu den sog. Hochdruck-Aufsammelpressen führte, die das Getreidestroh sehr stark verdichten und auf diese Weise hochverdichtete, aber dafür auch relativ schwere Strohballen bilden konnten.

Im Wesentlichen sind in heutiger Zeit zwei Varianten von gezogenen und zapfwellenbetriebenen Hochdrucksammelpressen gebräuchlich, die nach der Form der damit gebildeten Ballen unterschieden werden. Beide Varianten erlauben eine hocheffektive und sehr schnelle Arbeitserledigung auch bei großen zu befahrenden Flächen und den damit einhergehenden großen Volumina an getrocknetem und zu pressendem Halmgut.

Eine erste gebräuchliche Variante formt zylindrische Ballen, bei denen das in Schwaden auf dem Feld liegende Halmgut aufgenommen und in der Maschine um eine Längsmittelachse gewickelt sowie vor dem heckseitigen Auswerfen aus der Maschine mittels Sisalgarn oder einem anderen geeigneten Bindegarn zusammengebunden wird. Die solchermaßen geformten und gepressten Rundballen werden abschließend auf dem Feld abgelegt, indem jeder gepresste Ballen durch eine rückseitige Öffnung der Rundballenpresse ausgeworfen oder herausgerollt wird, um ohne weitere Behandlung oder Bearbeitung auf seiner zylindrischen Mantelfläche zum Liegen zu kommen. Die auf dem Feld abgelegten Ballen können anschließend in einem nachfolgenden Arbeitsgang mittels beweglicher Gabelzinken, die an einer landwirtschaftlichen Zugmaschine oder an einem Hoflader angeordnet sind, aufgenommen und direkt zum nahegelegenen Hof oder für einen längeren Transportweg zu einem Sammeltransporter wie einem offenen Anhänger gebracht und dort aufgeladen werden.

Eine ebenso verbreitete zweite Variante, die als Packenpresse oder Großpackenpresse bezeichnet wird, formt quaderförmige Ballen, die in einem kontinuierlichen Herstell-, Umform- und Förderprozess aus dem aufgenommenen Heu oder Stroh geformt und nach dem Binden über eine heckseitig an der angehängten und mittels der landwirtschaftlichen Zugmaschine gezogenen und mittels deren Zapfwelle angetriebenen Packenpresse angebrachten sog. Schurre ausgegeben und auf dem Feld abgelegt werden. Die weitere Handhabung, d.h. das Aufnehmen, Laden, Stapeln etc. z.B. auf einem Anhänger, kann dieselbe sein wie bei Rundballen, wobei jedoch zu bemerken ist, dass sich quaderförmige Ballen leichter und platzsparender Stapeln und in größeren Mengen bevorraten lassen als die mehr Raum benötigenden Rundballen.

Ein typischer Materialfluss, den das aufgenommene Halmgut durch eine Rundballen-, durch eine Packenpresse oder durch eine sog. Großpackenpresse nimmt, findet sich bspw. in der EP 2 289 305 B1 beschrieben. EP3053430 A1 offenbart die technischen Merkmale von der Präambel des Gegenstands der unabhängigen Ansprüchen.

So weisen derartige Packen- oder Ballenpressen eine Aufnahmeeinheit, ein sog. Pick-Up auf, mit dem das auf dem Feld liegende Halmgut aufgenommen und in die Maschine überführt wird. Das aufgenommene Erntegut kann anschließend mittels Schneckenförderer von den Seiten zentral zur Mitte zusammengeführt werden, da nachgeordnete Schneidwerke und Presskanäle in aller Regel deutlich schmaler ausgeführt sind als der Aufnahme-Pick-Up sowie die Gesamtbreite der Presse. Während etwa eine Gesamtbreite einer solchen gezogenen Presse bei etwas mehr als zwei Metern liegen kann, beträgt das Breitenmaß der damit geformten Packen oder Ballen normalerweise nur wenig mehr als ein Meter.

Großballenpressen verfügen nicht zwingend über ein Schneidwerk, während die hier definierte und nachfolgend anhand ihrer wesentlichen Merkmale näher beschriebene Packenpresse definitionsgemäß ein Schneidwerk mit einer Vielzahl an parallel geführten Schneidmessern aufweist, mit denen das aufgenommene Halmgut in kleinere Abschnitte zerteilt werden kann, sofern dies im Zusammenhang mit dem Pressvorgang und dem Prozess der Packenbildung gewünscht ist. Sofern ein solches Schneidwerk vorhanden ist, befindet sich dieses typischerweise in Förderrichtung unmittelbar hinter der Schneckenzusammenführung. Meist verfügen Großballen- oder Großpackenpressen über eine Vorpresseinrichtung, die in der Lage ist, die anfallende Masse des Erntegutes in kleineren Teilpaketen vorzuverdichten und die Teilpakete anschließend in die Hauptpresskammer zu übergeben. Auf diese Weise kann gewährleistet werden, dass die Hauptpresskammer nicht unmittelbar einen unverdichteten Gutstrom verarbeiten und pressen muss, was bei den üblichen Leistungsbereichen der Großballenpressen oder Großpackenpressen nicht sinnvoll wäre.

Über einen Presskolben, der bei einer solchen Großballen- oder Großpackenpresse oszillierend arbeitet, wird das Halmgut hoch verdichtet und dann der geformte Ballen oder Packen mit Garn umwickelt und das Garn verknotet. Das Erntegut wird in der Presskammer durch den Kolben verdichtet, bis ein entsprechender Ballen- oder Packengegendruck im Presskanal durch die Auswurfeinrichtung aufgebaut ist. Danach wird die Garnzuführung sowie die Bindeeinrichtung mit dem Knoter ausgelöst und der Ballen oder Packen gebunden. Anschließend wird der gebundene Ballen oder Packen zur Auswurfeinrichtung, der sog. Schurre weitergeführt und schließlich durch den Staudruck und die ununterbrochene Zuführung weiterer Ballen oder Packen heckseitig ausgeworfen.

Die Zuführung der vorverdichteten Teilpakete an Halmgut ist diskontinuierlich in Anhängigkeit von der jeweiligen Stellung des Presskolbens. Wenn der Kolben zurückgezogen ist, kann die Presskammer befüllt werden, da hierbei die Öffnung der Zuführung zugänglich ist. Zur abschließenden Verdichtung erfolgt ein Vorschub des Kolbens der Hauptpresskammer, wodurch der quaderförmige Großpacken geformt wird, um anschließend mit Garn umwickelt zu werden, wonach das Garn verknotet wird.

Weitere Aspekte des Materialflusses lassen sich der genannten Patentschrift EP 2 289 305 B1 oder auch anderen Patentdokumenten entnehmen. Neben den beschriebenen Details des Materialflusses befasst sich das genannte Patentdokument mit Aspekten der Reinigung, insbesondere der Bindeeinrichtung.

Darüber hinaus bedürfen zahlreiche weitere Verarbeitungsmodule in einer solchen Packenpresse der regelmäßen Reinigung und Wartung. Ein solches Verarbeitungsmodul, das relativ häufig gewartet und für Wartungszwecke aus der Packenpresse entnommen werden muss, ist die bereits erwähnte Schneidvorrichtung, die im vorliegenden Zusammenhang auch als Schneidmodul bezeichnet wird. Ein solches Schneidmodul kann bspw. eine Vielzahl von parallel angeordneten und ggf. verstellbaren oder in Gruppen verstellbaren Schneidmessern umfassen, die mit einem rotierenden Schneidwerk zusammenwirken und es auf diese Weise ermöglichen, das aufgenommene Halmgut in eine gewünschte Länge zu bringen.

Es hat sich in der Praxis jedoch als nachteilig erwiesen, dass diese Schneidmodule aufgrund ihres nicht unerheblichen Gewichts und ihrer Größe nur sehr mühsam manuell handhabbar und/oder aus der Maschine entnehmbar sind, weshalb es als ein vorrangiges Ziel der vorliegenden Erfindung betrachtet werden kann, eine Entnahme einer Messerkassette im Zusammenhang mit der Wartung oder Reinigung einer landwirtschaftlichen Halmgutpresse zu erleichtern.

Dieses Ziel der Erfindung wird mit den Gegenständen der unabhängigen Ansprüche erreicht. Merkmale vorteilhafter Weiterbildungen der Erfindung finden sich in den jeweiligen abhängigen Ansprüchen.

So schlägt die Erfindung zur Erreichung des genannten Ziels eine landwirtschaftliche Halmgutpresse zum Pressen von insbesondere quaderförmigen Ballen oder Großballen vor, die mit einer Aufnahmeeinrichtung zum Aufnehmen von Erntegut, mit einem der Aufnahmeeinrichtung in Förderrichtung des Erntegutes nachgeordneten Schneidmodul zum Zerkleinern des Erntegutes sowie mit einer dem Schneidmodul nachgeordneten Presseinrichtung zum Pressen des Erntegutes zu Ballen definierter Größe ausgestattet ist, wobei der Presseinrichtung eine Bindeeinrichtung zugeordnet ist, die Garn um einen fertig gepressten Ballen oder Großballen wickelt und verknotet.

Weiterhin umfasst die Halmgutpresse eine der Presseinrichtung nachgeordnete Förder- und/oder Ablageeinrichtung zum Auswerfen fertig gepresster und mit Garn umwickelter Ballen oder Großballen.

Wie es bei solchen Halmgutpressen üblich ist, weist das Schneidmodul zumindest eine aus der Halmgutpresse in einer Querrichtung zu einer Längsmittelachse der Halmgutpresse entnehmbare Messerkassette mit einer Vielzahl von dort befestigten oder gelagerten Schneidmessern sowie eine mit den Schneidmessern der Messerkassette in schneidendem Eingriff stehende rotierende Messerwalze auf. Die Messerkassette kann zu Wartungszwecken aus dem Schneidmodul entnommen werden, was bei herkömmlichen Halmgutpressen oder Packenpressen einen vergleichsweise großen Aufwand, insbesondere durch die manuelle Betätigung des Verschiebemechanismus bedeutet. Aus diesem Grund ist bei der erfindungsgemäßen Halmgutpresse der Messerkassette mit der Vielzahl an Schneidmessern ein motorischer Antrieb zugeordnet, der die Messerkassette zwischen einer Betriebsposition innerhalb der Halmgutpresse und einer aus der Halmgutpresse herausgefahrenen Serviceposition bewegen kann.

Der motorische Antrieb ermöglicht es auf einfache und für den Benutzer sehr komfortable Weise, die Messerkassette aus dem Schneidmodul der landwirtschaftlichen Halmgutpresse seitlich herauszufahren und Wartungsarbeiten der unterschiedlichsten Art zugänglich zu machen, ohne dass hierzu ein relativ schwergängiger und bei Verschmutzung oftmals kaum mehr zu bewegender Schlitten auf manuelle Weise herausgezogen werden muss. Auch kann durch ein solches seitliches Herausbewegen der Messerkassette diese relativ problemlos entnommen werden, um sie gegen eine andere Messerkassette auszutauschen oder zu reparieren, was bisher mit umfangreicheren Eingriffen in die Maschinenkonstruktion verbunden war.

Bei solchen landwirtschaftlichen Halmgutpressen befindet sich die Vielzahl an Schneidmessern der Messerkassette in deren Betriebsposition im schneidenden Eingriff mit einer fest innerhalb eines Gehäuses der Halmgutpresse gelagerten rotierenden Messerwalze befinden. Dies stellte die normale Einbauposition der Messerkassette dar, wie sie für die einwandfreie Funktion und den Materialfluss innerhalb der Halmgutpresse notwendig ist.

In einer Serviceposition ist die Messerkassette dagegen nicht betriebsbereit und/oder deaktiviert, wobei hierbei der Materialfluss für das Halmgut unterbrochen ist. Die Messerkassette ist in der aus der von der Betriebsposition entfernten Serviceposition zu Wartungs-, Service- und/oder Reparaturzwecken aus der Halmgutpresse entnehmbar und/oder von dieser trennbar.

Bei der erfindungsgemäßen landwirtschaftlichen Halmgutpresse ist nun vorgesehen, dass die Messerkassette in linearer Bewegungsrichtung mittels des motorischen Antriebes zwischen zwei Endlagen beweglich ist, wobei die erste Endlage die Betriebsposition bildet, bei welcher die Schneidmesser sich in schneidendem Eingriff mit der rotierenden Messerwalze befinden, und wobei die zweite Endlage die Serviceposition bildet, in welcher die Messerkassette zu Wartungs-, Service- und/oder Reparaturzwecken aus der Halmgutpresse entnehmbar und/oder von dieser trennbar ist.

Der motorische Antrieb kann insbesondere auf einen verschiebbaren Schlitten einwirken, der in der Bewegungsrichtung quer zur Längsmittelachse der Halmgutpresse zwischen den beiden Endlagen bewegbar ist, und der die entnehmbare Messerkassette trägt.

Wahlweise kann der motorische Antrieb des Schlittens eine mit dem verschiebbaren Schlitten verbundene Zahnstange umfassen, die mit einem elektromotorisch betriebenem Antriebszahnrad in Verzahnungseingriff steht. Die Zahnstange kann vorzugsweise fest mit dem Schlitten verbunden sein, so dass ein Antriebsritzel des motorischen Antriebes die Zahnstange bewegen und damit den Schlitten aus der Betriebslage heraus und in die Serviceposition bringen kann.

Ebenso denkbar ist es, dass der motorische Antrieb des Schlittens eine mit dem verschiebbaren Schlitten verbundene Zahnstange umfasst, die mit einem hydraulisch oder pneumatisch betriebenem Antriebszahnrad in Verzahnungseingriff steht.

Wahlweise ist auch eine kinematische Umkehrung der in Verzahnungseingriff stehenden Teile möglich. So kann etwa der motorische Antrieb des Schlittens ein am verschiebbaren Schlitten gelagertes und motorisch betriebenes Zahnrad oder Antriebszahnrad umfassen, das mit einer Zahnstange im Verzahnungseingriff steht, die innerhalb der Maschine montiert ist. Das am beweglichen Schlitten befindliche Antriebszahnrad kann bspw. elektromotorisch angetrieben werden. Die Zahnstange kann bei dieser Variante bspw. fest in der Maschine verankert sein, so dass das damit kämmende Antriebsritzel des motorischen Antriebes den Schlitten mitsamt der Messerkassette bewegen und damit den Schlitten aus der Betriebslage heraus und in die Serviceposition bringen kann.

Ebenso denkbar ist es, dass der motorische Antrieb für den Schlitten ein hydraulisch oder pneumatisch betriebenes Antriebszahnrad aufweist, das mit der in der Maschine montierten Zahnstange in Verzahnungseingriff steht, so dass der Schlitten mittels drehenden Antriebs des Zahnrades bewegt werden kann.

Außerdem kann gemäß einer weiteren Ausführungsvariante vorgesehen sein, dass der motorische Antrieb des Schlittens einen mit dem verschiebbaren Schlitten gekoppelten Linearantrieb umfasst. Ein solcher Linearantrieb kann bspw. einen elektromotorischen Antrieb umfassen. Wahlweise kann ein solcher Linearantrieb auch einen fluidischen Antrieb umfassen. Ein solcher fluidischer Antrieb kann bspw. wenigstens einen doppeltwirkenden, mit hydraulischem Druck arbeitenden Zylinder umfassen. Ebenso kann der fluidische Antrieb wenigstens einen doppeltwirkenden, mit pneumatischem Druck arbeitenden Zylinder umfassen.

Bei einer weiteren alternativen Variante der landwirtschaftliche Halmgutpresse kann zudem vorgesehen sein, dass der motorische Antrieb des Schlittens einen mit dem verschiebbaren Schlitten verbundenen oder gekoppelten Zugmittelantrieb umfasst, der mittels wenigstens eines elektromotorischen Antriebs betätigt wird. Wenn in diesem Zusammenhang von einem Zugmittelantrieb die Rede ist, so kann dies bspw. ein Seilzugantrieb, ein Riemenantrieb, ein Kettenantrieb o. dgl. sein.

Das hierbei jeweils zum Einsatz kommende Zugmittel wird mittels mindestens eines Antriebsmotors betätigt und zieht den Schlitten mitsamt der Messerkassette quer zur Längsrichtung oder Fahrtrichtung der Halmgutpresse aus dieser heraus, um die Serviceposition zu erreichen. In Gegenrichtung zieht das vom Antriebsmotor betätigte Zugmittel den Schlitten mitsamt der Messerkassette aus der Serviceposition in die Betriebsposition innerhalb der Halmgutpresse. D.h. der Schlitten wird hierbei quer zur Maschinenlängsrichtung in horizontaler oder ggf. leicht geneigter Richtung seitlich aus der Halmgutpresse herausgefahren oder - zur Herstellung der Betriebsbereitschaft der Maschine - in diese hineingefahren.

Als Antriebsübertragungsrad kann im Falle eines Riemenantriebs oder Zahnriemenantriebes ein entsprechendes Riemenrad oder Zahnrad zum Einsatz kommen, während im Falle eines Seilzugantriebes, der in der Regel mittels eines Drahtseils als Zugmittel oder wahlweise mehrerer Drahtseile arbeiten wird, geeignete Übertragungsräder oder Rollen zum Einsatz kommen können. Entsprechendes gilt für einen Kettenantrieb, der geeignete Kettenräder benötigt, welche die Antriebsleistung des Antriebsmotors auf die Rollen- oder Gliederkette übertragen, die das Zugmittel zur Bewegung des Schlittens bildet.

Wenn im Zusammenhang mit dem hier beschriebenen Zugmittelantrieb von einem elektromotorischen Antrieb die Rede ist, so ist dies gleichwohl nicht einschränkend zu verstehen, da das Zugmittel durchaus von einem anderen geeigneten Antriebsmotor bewegt werden kann, so etwa von einem hydrostatischen Antrieb o. dgl.

Zur Erreichung des oben genannten Ziels schlägt die Erfindung weiterhin ein Verfahren zur Handhabung eines aus einer landwirtschaftlichen Halmgutpresse entnehmbaren Schneidmoduls vor, das insbesondere aus einer landwirtschaftlichen Halmgutpresse gemäß einer der zuvor beschriebenen Ausführungsvarianten entnehmbar und dort einsetzbar ist. Diese Halmgutpresse dient dem Pressen von insbesondere quaderförmigen Ballen oder Großballen. Zudem weist die Halmgutpresse eine Aufnahmeeinrichtung zum Aufnehmen von Erntegut, ein der Aufnahmeeinrichtung in Förderrichtung des Erntegutes nachgeordnetes Schneidmodul zum Zerkleinern des Erntegutes sowie eine dem Schneidmodul nachgeordnete Presseinrichtung zum Pressen des Erntegutes zu Ballen definierter Größe auf, wobei der Presseinrichtung weiterhin eine Bindeeinrichtung zugeordnet ist, die Garn um einen fertig gepressten Ballen oder Großballen wickelt und verknotet.

Darüber hinaus ist die Halmgutpresse mit einer der Presseinrichtung nachgeordneten Förder- und/oder Ablageeinrichtung zum Auswerfen fertig gepresster und mit Garn umwickelter Ballen oder Großballen ausgestattet.

Das Schneidmodul der Halmgutpresse weist zumindest eine aus der Halmgutpresse in einer Querrichtung zu einer Längsmittelachse der Halmgutpresse entnehmbare Messerkassette mit einer Vielzahl von dort befestigten oder gelagerten Schneidmessern sowie eine mit den Schneidmessern der Messerkassette in schneidendem Eingriff stehende rotierende Messerwalze auf. Das erfindungsgemäße Verfahren sieht vor, dass die Messerkassette mit der Vielzahl an Schneidmessern mittels eines motorischen Antriebes zwischen einer Betriebsposition innerhalb der Halmgutpresse und einer aus der Halmgutpresse herausgefahrenen Serviceposition bewegt werden kann.

Eine Verfahrensvariante sieht zudem vor, dass die Messerkassette in ihrer von der Betriebsposition entfernten Serviceposition zu Wartungs-, Service- und/oder Reparaturzwecken aus der Halmgutpresse entnehmbar und/oder von dieser trennbar ist.

Vorzugsweise kann die Messerkassette in linearer Bewegungsrichtung zwischen zwei Endlagen bewegt werden, wobei die erste Endlage die Betriebsposition bildet, bei welcher die Schneidmesser sich in schneidendem Eingriff mit der rotierenden Messerwalze befinden, und wobei die zweite Endlage die Serviceposition bildet, in welcher die Messerkassette zu Zwecken der Wartung, des Service und/oder der Reparatur aus der Halmgutpresse entnehmbar und/oder von dieser trennbar ist.

Das Verfahren kann zudem vorsehen, dass die Messerkassette mittels eines motorisch angetriebenen verschiebbaren Schlittens in der Bewegungsrichtung quer zur Längsmittelachse der Halmgutpresse zwischen den beiden Endlagen bewegt werden kann.

Es sei an dieser Stelle ausdrücklich erwähnt, dass alle Aspekte und Ausführungsvarianten, die im Zusammenhang mit der erfindungsgemäßen Halmgutpresse erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Halmgutpresse von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Halmgutpresse betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Halmgutpresse.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer landwirtschaftlichen Halmgutpresse in perspektivischer Ansicht.
Fig. 2 zeigt in drei Detailansichten (Fig. 2A, Fig. 2B und Fig. 2C) einen motorischen Antrieb zum Herausbewegen einer Messerkassette eines Schneidmoduls aus der Halmgutpresse.
Fig. 3 zeigt in drei weiteren Detailansichten (Fig. 3A, Fig. 3B und Fig. 3C) aufeinanderfolgende Prozessschritte beim motorischen Herausbewegen eines verschiebbaren Schlittens aus einem Schneidmodul der Halmgutpresse, um eine auf dem Schlitten montierte Messerkassette zu Service-, Wartungs- und/oder Reparaturzwecken aus der Halmgutpresse entnehmen zu können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

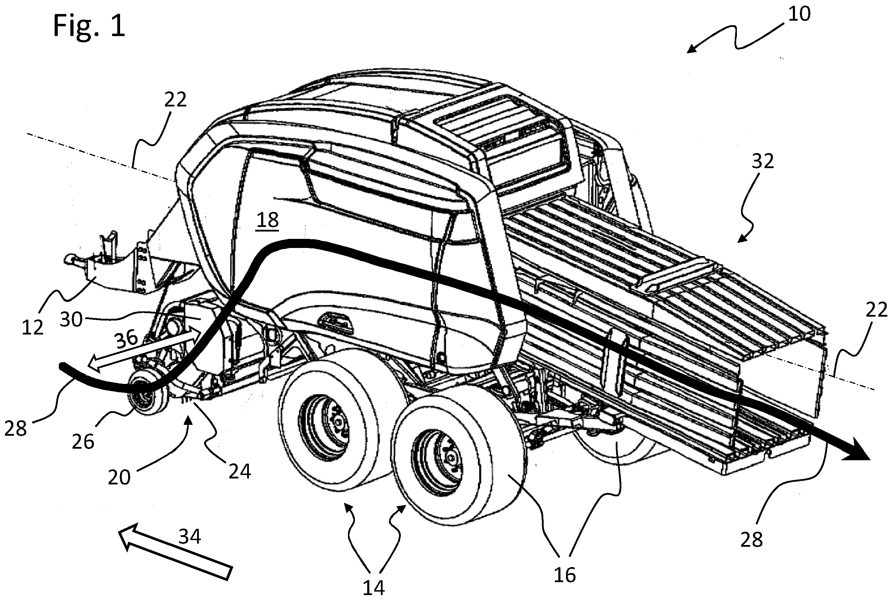

Die schematische Perspektivansicht der Fig. 1 zeigt eine Ausführungsvariante einer landwirtschaftlichen Halmgutpresse 10, die dem Pressen von quaderförmigen Ballen oder Großballen dient. Da eine solche Halmgutpresse 10 im Gegensatz zu einer sog. Ballenpresse keine zylindrischen Halmgutballen formt, sondern quaderförmige Ballen, wird sie üblicherweise auch als Packenpresse oder Großpackenpresse bezeichnet. Da diese Bezeichnungen in der Praxis nicht immer einheitlich sind und wahlweise verwendet werden können, werden im vorliegenden Zusammenhang alle diese genannten Bezeichnungen der landwirtschaftlichen Maschine - sei dies die Halmgutpresse, die Ballenpresse oder die Großballenpresse - jeweils mit der Bezugsziffer 10 gekennzeichnet.

Wie dies die perspektivische Ansicht der Fig. 1 von schräg hinten auf die linke Längsseite der landwirtschaftlichen Halmgutpresse 10 erkennen lässt, weist diese eine frontseitige Zugdeichsel 12 auf, so dass das gezogene Fahrzeug an einer geeigneten Anhängevorrichtung an einem Heckbereich einer landwirtschaftlichen Zugmaschine (hier nicht gezeigt) angehängt werden kann. Das Fahrgestell der Halmgutpresse 10 weist eine Zwillingsachse 14 mit insgesamt vier relativ breit bereiften Stützrädern 16 auf, so dass auch schwerere Lasten ohne zu hohe Bodendrücke auf dem Feld abgestützt werden können.

Oberseitig des Fahrgestells ist ein Gehäuse 18 erkennbar, in dem die nachfolgend erläuterten Komponenten der landwirtschaftlichen Halmgutpresse 10 aufgenommen sind.

Unmittelbar hinter der Zugdeichsel 12 und vor der Zwillingsachse 14 mit den insgesamt vier Stützrädern 16 befindet sich eine zum Boden reichende Aufnahmeeinrichtung 20, die oftmals auch als Pick-Up bezeichnet wird, und die dem Aufnehmen von Erntegut oder Halmgut dient. Damit die Aufnahmeeinrichtung 20 mit einer darin befindlichen, um eine horizontale und quer zu einer Längsmittelachse 22 der Halmgutpresse 10 rotierenden und normalerweise angetriebenen Zinkenwalze oder Zuführwalze 24 einen gleichbleibenden Abstand zum Boden einhalten kann, sind seitliche Stützräder 26 vorgesehen, wobei die Fig. 1 lediglich das linke dieser beiden Stützräder 26 erkennen lässt.

Der gesamte Materialfluss durch die Halmgutpresse 10 ist durch den Pfeil 28 angedeutet. Demzufolge befindet sich zwischen dem Gehäuse 18 und der Aufnahmeeinrichtung 20 in Förderrichtung des Erntegutes ein der Aufnahmeeinrichtung 20 nachgeordnetes Schneidmodul 30, das dem Zerkleinern des Erntegutes dient. Üblicherweise und auch im vorliegenden Ausführungsbeispiel umfasst das Schneidmodul 30 eine hier nicht näher gezeigte Messerkassette mit einer Vielzahl von dort befestigten oder gelagerten Schneidmessern sowie eine mit den Schneidmessern der Messerkassette in schneidendem Eingriff stehende rotierende Messerwalze (hier ebenfalls nicht gezeigt). Die Schneidmesser der Messerkassette können vorzugsweise motorisch verstellt werden, um die Halmlänge des zu pressenden Halmgutes variieren zu können, so dass je nach Einstellung der Schneidmesser unterschiedliche Halmlängen eingestellt und das aufgenommene Halmgut entsprechend geschnitten werden kann.

Außerdem umfasst die Halmgutpresse 10 eine dem Schneidmodul 30 nachgeordnete Presseinrichtung, die sich innerhalb des Gehäuses 18 befindet und deshalb hier nicht erkennbar ist. Die Presseinrichtung dient dem Pressen des Erntegutes zu Ballen definierter Größe, wobei der Presseinrichtung außerdem eine Bindeeinrichtung (hier ebenfalls nicht dargestellt) zugeordnet ist, die Garn um einen fertig gepressten Ballen oder Großballen wickelt und verknotet.

Schließlich ist heckseitig am Gehäuse 18 eine der Presseinrichtung nachgeordnete Förder- und/oder Ablageeinrichtung 32 erkennbar, mit denen die fertig gepressten und mit Garn umwickelten Ballen oder Großballen ausgeworfen werden. Diese Förder- und/oder Ablageeinrichtung 32 wird oftmals auch als Schurre bezeichnet und soll im vorliegenden Zusammenhang generell mit der Bezugsziffer 32 bezeichnet werden.

Wie es die Fig. 1 erkennen lässt, reicht der den Materialfluss kennzeichnende Pfeil 28 vom Boden vor der Aufnahmeeinrichtung 20 durch die Aufnahmeeinrichtung 20 zum Schneidmodul 30 und führt von dort ins Gehäuse 18 mit der darin befindlichen Presseinrichtung, bevor er durch die Schurre 32 bzw. die Förder- und/oder Ablageeinrichtung 32 nach hinten aus dem Heck der Halmgutpresse 10 hinaus weist. Der Materialfluss 28 ist damit im Wesentlichen entgegengesetzt zur normalen Fahrtrichtung 34 der Halmgutpresse 10 orientiert, die in der Darstellung der Fig. 1 von rechts nach links weist.

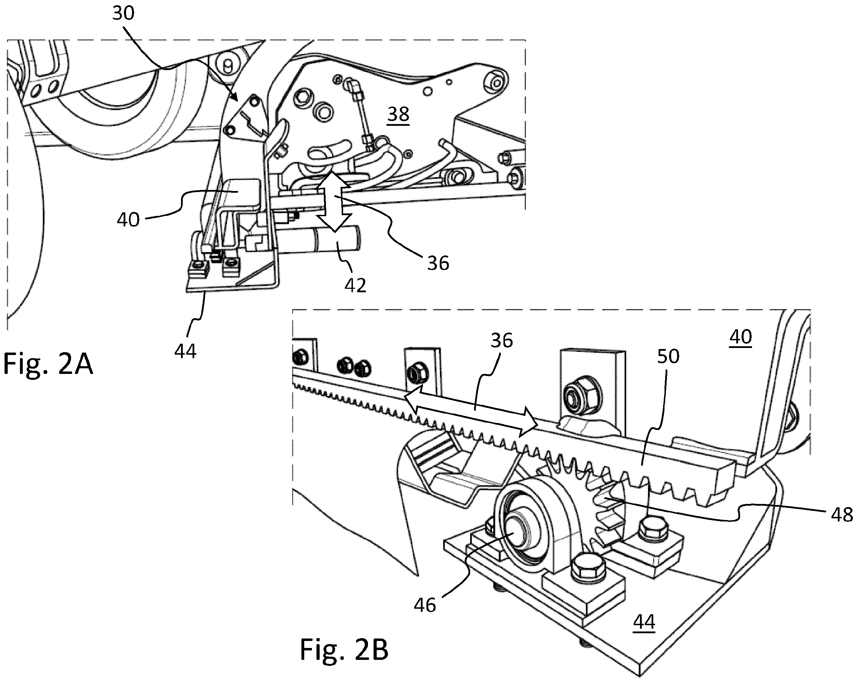

Wie es die weiteren Figuren 2A bis 3C deutlicher als die Fig. 1 erkennen lassen, umfasst das Schneidmodul 30 eine seitlich aus der Halmgutpresse 10, d.h. in einer Querrichtung zur Längsmittelachse 22 der Halmgutpresse 10 herausfahrbare und wahlweise aus der Halmgutpresse 10 entnehmbare Messerkassette mit der oben erwähnten Vielzahl von dort befestigten oder gelagerten Schneidmessern. Die ebenfalls oben bereits erwähnte, hier jedoch nicht erkennbare Messerwalze steht mit den Schneidmessern der Messerkassette allerdings nur dann in schneidendem Eingriff, wenn sich die Messerkassette in ihrer Betriebslage innerhalb der Halmgutpresse 10 befindet.

Gemäß der hier beschriebenen Erfindung ist der Messerkassette mit der Vielzahl an Schneidmessern ein motorischer Antrieb zugeordnet, der die Messerkassette des Schneidmoduls 30 zwischen einer Betriebsposition innerhalb der Halmgutpresse 10 und einer aus der Halmgutpresse 10 seitlich herausgefahrenen Serviceposition bewegen kann. Diese motorisch bewirkbare Verschiebung der Messerkassette zwischen den beiden Endlagen und ihre Bewegungsrichtung ist in Fig. 1 durch den Doppelpfeil 36 angedeutet, der am Schneidmodul 30 ansetzt und die Entnehmbarkeit der Messerkassette verdeutlichen und veranschaulichen soll.

Die Detailansichten der Figuren 2A bis 2C verdeutlichen eine beispielhafte Anordnung der quer zur Längsmittelachse 22 der landwirtschaftlichen Halmgutpresse 10 (vgl. Fig. 1) in Verschieberichtung 36 seitlich herausfahrbaren Messerkassette 38, die unterhalb des Gehäuses 18 der Halmgutpresse 10, im Bereich oder in der Nähe der Aufnahmevorrichtung 20 positioniert ist. Wie schon in Fig. 1 angedeutet, ist auch in den Figuren 2A bis 2C das Schneidmodul allgemein mit der Bezugsziffer 30 gekennzeichnet. Die aus dem Schneidmodul 30, das zudem die hier nicht gezeigte rotierende Messerwelle umfasst, motorisch herausfahrbare Messerkassette 38 ist auf einem Schlitten 40 o. dgl. montiert und kann von diesem entnommen werden, wenn der Schlitten 40 seitlich aus dem Schneidmodul 30 herausgefahren wurde.

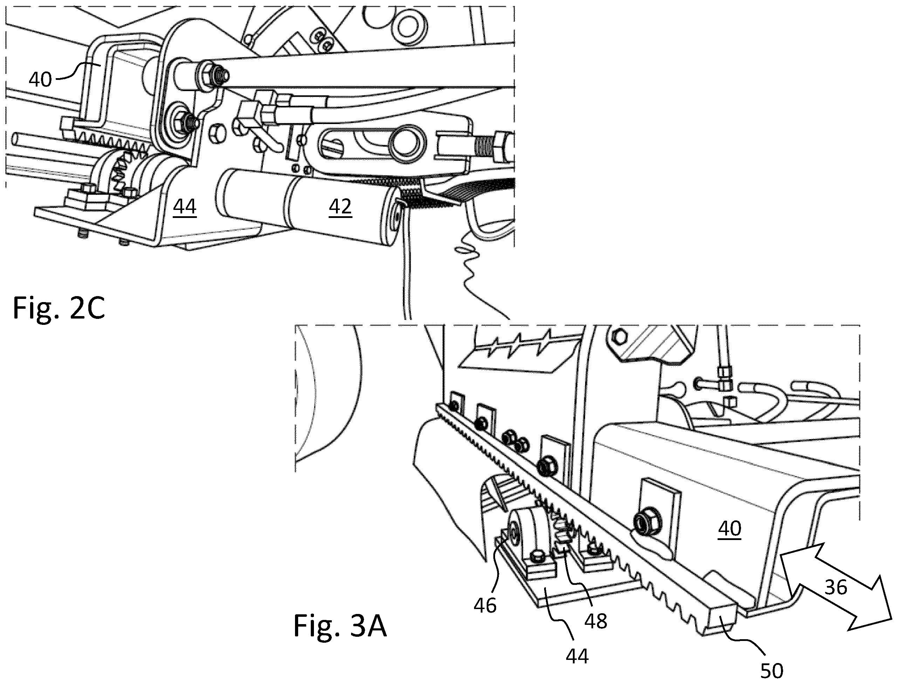

Die Figuren 2A und 2C lassen zudem einen elektrischen Antriebsmotor 42 erkennen, der an einem maschinenfesten Trägerbauteil 44 montiert ist (vgl. Figuren 2A und 2B). Auf einer an diesem Trägerbauteil 44 gelagerten Motorwelle 46 befindet sich ein Zahnritzel 48, das mit einer Zahnstange 50 im Eingriff steht, die mit dem verschiebbar gelagerten Schlitten 40 verbunden ist (vgl. Fig. 2B). Die Fig. 2B lässt zudem erkennen, dass die Längserstreckungsrichtung der Zahnstange 50 gleichzeitig die Verschieberichtung 36 der aus der Halmgutpresse 10 herausfahrbaren Messerkassette 38 definiert.

Die Figuren 2A, 2B und 2C lassen darüber hinaus eine Betriebsposition der Messerkassette 38 des Schneidmoduls 30 erkennen, bei welcher sich die Vielzahl an Schneidmessern (nicht erkennbar) der Messerkassette 38 in schneidendem Eingriff mit einer hier ebenfalls nicht erkennbaren Messerwalze befinden, die fest innerhalb des Gehäuses 18 der Halmgutpresse 10 rotierend gelagert ist.

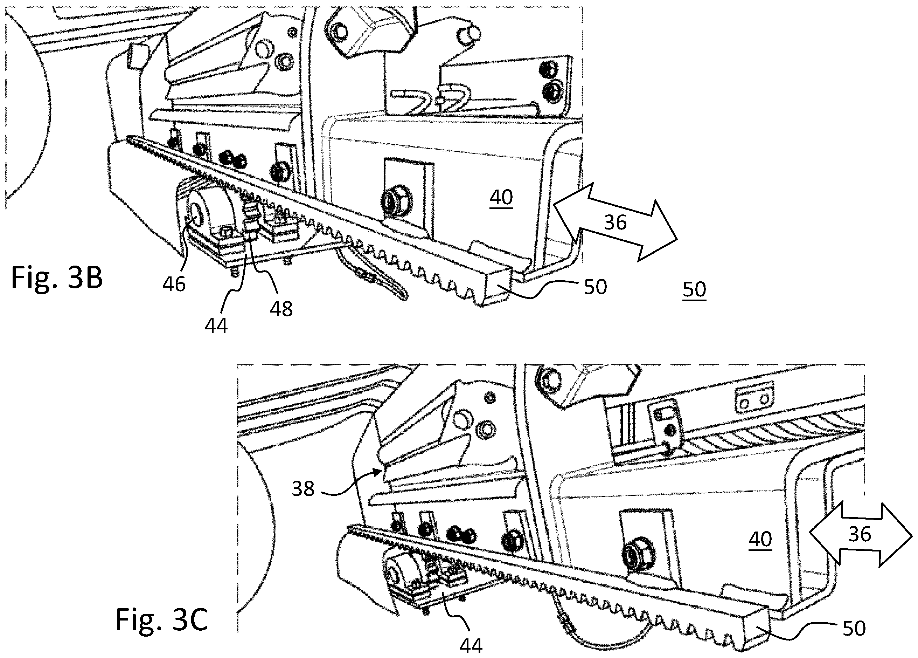

Die weiteren Detailansichten der Figuren 3A, 3B und 3C verdeutlichen, wie die Messerkassette 38 mittels des elektrischen Antriebsmotors 42, der über sein angetriebenes Zahnritzel 48 auf die Zahnstange 50 wirkt, in die Serviceposition gebracht werden kann, bei der die Messerkassette 38 nicht mehr betriebsbereit ist und bspw. zu Wartungs-, Service- und/oder Reparaturzwecken aus der Halmgutpresse 10 getrennt und entnommen werden kann.

Hierzu wird durch den am maschinenfesten Trägerbauteil 44 montierten elektrischen Antriebsmotor 42 das Zahnritzel 48 angetrieben, wodurch die damit im Verzahnungseingriff befindliche Zahnstange 50 mitsamt dem fest damit verschraubten Schlitten 40 in Verschieberichtung 36 aus dem Schneidmodul 30 herausbewegt werden kann.

Die Fig. 3A zeigt eine beginnende Verschiebbewegung des Schlittens 40 mit der Messerkassette 38 aus dem Schneidmodul 30 heraus. Die Darstellung der Fig. 3B zeigt einen weiter heraus bewegten Schlitten 40, während die Fig. 3C einen noch weiteren Verschiebeweg verdeutlicht, bei dem sich der Schlitten 40 der Serviceposition zur Entnahme der Messerkassette 38 angenähert bzw. diese beinahe erreicht hat.

Es sei an dieser Stelle ergänzend erwähnt, dass die Figuren 2A bis 3C beispielhaft einen elektrischen Antriebsmotor 42 für den Antrieb der seitlich in die Serviceposition bringbaren Messerkassette 38 verdeutlichen. Dies ist jedoch keinesfalls einschränkend zu verstehen. So kann der motorische Antrieb des gezeigten Schlittens 40 oder einer anderen geeigneten Verschiebekonstruktion einen mit dem verschiebbaren Schlitten 40 verbundenen Linearantrieb o. dgl. umfassen. Ebenso denkbar wäre es, anstelle des elektrischen Antriebsmotors 42 z.B. einen hydrostatischen oder pneumatischen Antriebsmotor zu verwenden.

Außerdem sind Varianten denkbar, bei denen der motorische Antrieb des Schlittens 40 einen mit dem verschiebbaren Schlitten 40 gekoppelten Linearantrieb (hier nicht gezeigt) umfasst. Ein solcher Linearantrieb kann wiederum einen elektromotorischen Antrieb umfassen, der in diesem Fall keine rotatorische Bewegung, sondern eine lineare Verschiebebewegung bewirken kann.

Darüber hinaus kann ein solcher Linearantrieb bspw. auch einen fluidischen Antrieb umfassen. Mit einem solchen fluidischen Antrieb kann bspw. ein doppeltwirkender, mit hydraulischem Druck arbeitender Zylinder gemeint sein. Ebenso kann mit dem fluidischen Antrieb wahlweise auch ein doppeltwirkender, mit pneumatischem Druck arbeitender Zylinder gemeint sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Halmgutpresse, landwirtschaftliche Halmgutpresse, Packenpresse, Großpackenpresse
- 12: Zugdeichsel
- 14: Zwillingsachse
- 16: Stützrad, Stützräder
- 18: Gehäuse
- 20: Aufnahmeeinrichtung, Pick-Up
- 22: Längsmittelachse
- 24: Zinkenwalze, Zuführwalze
- 26: Stützrad (Aufnahmeeinrichtung)
- 28: Materialfluss (Halmgut, Erntegut)
- 30: Schneidmodul
- 32: Schurre, Fördereinrichtung, Ablageeinrichtung, Förder- und/oder Ablageeinrichtung
- 34: Fahrtrichtung
- 36: Verschieberichtung, Entnahmerichtung (der Messerkassette)
- 38: Messerkassette
- 40: Schlitten
- 42: elektrischer Antriebsmotor
- 44: maschinenfestes Trägerbauteil
- 46: Motorwelle
- 48: Zahnritzel
- 50: Zahnstange

## Patentansprüche

1. Landwirtschaftliche Halmgutpresse (10) zum Pressen von insbesondere quaderförmigen Ballen oder Großballen, mit einer Aufnahmeeinrichtung (20) zum Aufnehmen von Erntegut, mit einem der Aufnahmeeinrichtung (20) in Förderrichtung (28) des Erntegutes nachgeordneten Schneidmodul (30) zum Zerkleinern des Erntegutes, mit einer dem Schneidmodul (30) nachgeordneten Presseinrichtung zum Pressen des Erntegutes zu Ballen definierter Größe, wobei der Presseinrichtung eine Bindeeinrichtung zugeordnet ist, die Garn um einen fertig gepressten Ballen oder Großballen wickelt und verknotet, sowie mit einer der Presseinrichtung nachgeordneten Förder- und/oder Ablageeinrichtung (32) zum Auswerfen fertig gepresster und mit Garn umwickelter Ballen oder Großballen,
- wobei das Schneidmodul (30) zumindest eine aus der Halmgutpresse (10) in einer Querrichtung zu einer Längsmittelachse (22) der Halmgutpresse (10) entnehmbare Messerkassette (38) mit einer Vielzahl von dort befestigten oder gelagerten Schneidmessern sowie eine mit den Schneidmessern der Messerkassette (38) in schneidendem Eingriff stehende rotierende Messerwalze umfasst,
**dadurch gekennzeichnet dass** der Messerkassette (38) mit der Vielzahl an Schneidmessern ein motorischer Antrieb (42) zugeordnet ist, der die Messerkassette (38) zwischen einer Betriebsposition innerhalb der Halmgutpresse (10) und einer aus der Halmgutpresse (10) herausgefahrenen Serviceposition bewegen kann,
- bei welcher die Messerkassette (38) mittels eines motorisch angetriebenen verschiebbaren Schlittens (40) in der Bewegungsrichtung (36) quer zur Längsmittelachse (22) der Halmgutpresse (10) zwischen den beiden Endlagen bewegbar ist,
- wobei der motorische Antrieb (42) des Schlittens (40) eine mit dem verschiebbaren Schlitten (40) verbundene Zahnstange (50) umfasst, die mit einem elektromotorisch, hydraulisch oder pneumatisch betriebenem Antriebszahnrad (48) in Verzahnungseingriff steht, oder wobei dem Schlitten (40) ein mittels Zahnstange (50) angetriebenes Antriebszahnrad (48) zugeordnet ist, das mit der Zahnstange (50) in Verzahnungseingriff steht oder
- wobei der motorische Antrieb des Schlittens (40) einen mit dem verschiebbaren Schlitten (40) gekoppelten Linearantrieb umfasst, welcher Linearantrieb einen elektromotorischen Antrieb oder einen fluidischen Antrieb umfasst oder
- wobei der motorische Antrieb (42) des Schlittens (40) einen mit dem verschiebbaren Schlitten (40) verbundenen Seilzugantrieb umfasst, der mittels wenigstens eines elektromotorischen Antriebs betätigt wird.

2. Landwirtschaftliche Halmgutpresse nach Anspruch 1, bei welcher sich die Vielzahl an Schneidmessern der Messerkassette (38) in deren Betriebsposition im schneidenden Eingriff mit der fest innerhalb eines Gehäuses der Halmgutpresse (10) gelagerten rotierenden Messerwalze befinden.

3. Landwirtschaftliche Halmgutpresse nach Anspruch 1 oder 2, welche in der Serviceposition der Messerkassette (38) nicht betriebsbereit und/oder deaktiviert ist, wobei die Messerkassette (38) in der aus der von der Betriebsposition entfernten Serviceposition zu Wartungs-, Service- und/oder Reparaturzwecken aus der Halmgutpresse (10) entnehmbar und/oder von dieser trennbar ist.

4. Landwirtschaftliche Halmgutpresse nach einem der Ansprüche 1 bis 3, bei welcher die Messerkassette (38) in linearer Bewegungsrichtung (36) zwischen zwei Endlagen beweglich ist, wobei die erste Endlage die Betriebsposition bildet, bei welcher die Schneidmesser sich in schneidendem Eingriff mit der rotierenden Messerwalze (38) befinden, und wobei die zweite Endlage die Serviceposition bildet, in welcher die Messerkassette (38) zu Wartungs-, Service- und/oder Reparaturzwecken aus der Halmgutpresse (10) entnehmbar und/oder von dieser trennbar ist.

5. Landwirtschaftliche Halmgutpresse nach Anspruch 1 Alternative 2, bei welcher der den Linearantrieb bildende fluidische Antrieb wenigstens einen doppeltwirkenden, mit hydraulischem Druck arbeitenden Zylinder umfasst.

6. Landwirtschaftliche Halmgutpresse nach Anspruch 1 Alternative 2, bei welcher der den Linearantrieb bildende fluidische Antrieb wenigstens einen doppeltwirkenden, mit pneumatischem Druck arbeitenden Zylinder umfasst.

7. Verfahren zur Handhabung eines aus einer landwirtschaftlichen Halmgutpresse (10) entnehmbaren Schneidmoduls (30), das insbesondere aus einer landwirtschaftlichen Halmgutpresse (10) gemäß einem der Ansprüche 1 bis 13 entnehmbar und dort einsetzbar ist, welche Halmgutpresse (10) dem Pressen von insbesondere quaderförmigen Ballen oder Großballen dient, und welche Halmgutpresse (10) eine Aufnahmeeinrichtung (20) zum Aufnehmen von Erntegut, ein der Aufnahmeeinrichtung (20) in Förderrichtung (28) des Erntegutes nachgeordnetes Schneidmodul (30) zum Zerkleinern des Erntegutes sowie eine dem Schneidmodul (30) nachgeordnete Presseinrichtung zum Pressen des Erntegutes zu Ballen definierter Größe umfasst, wobei der Presseinrichtung weiterhin eine Bindeeinrichtung zugeordnet ist, die Garn um einen fertig gepressten Ballen oder Großballen wickelt und verknotet, und welche Halmgutpresse mit einer der Presseinrichtung nachgeordneten Förder- und/oder Ablageeinrichtung (32) zum Auswerfen fertig gepresster und mit Garn umwickelter Ballen oder Großballen ausgestattet ist,
- wobei das Schneidmodul (30) zumindest eine aus der Halmgutpresse (10) in einer Querrichtung zu einer Längsmittelachse (22) der Halmgutpresse (10) entnehmbare Messerkassette (38) mit einer Vielzahl von dort befestigten oder gelagerten Schneidmessern sowie eine mit den Schneidmessern der Messerkassette (38) in schneidendem Eingriff stehende rotierende Messerwalze umfasst,
**gekennzeichnet dadurch, dass** die Messerkassette (38) mit der Vielzahl an Schneidmessern mittels eines motorischen motorisch angetriebenen verschiebbaren Schlittens (40) in der Bewegungsrichtung (36) quer zur Längsmittelachse (22) der Halmgutpresse (10) zwischen einer Betriebsposition innerhalb der Halmgutpresse (10) und einer aus der Halmgutpresse (10) herausgefahrenen Serviceposition bewegt werden kann;
- wobei der motorische Antrieb (42) des Schlittens (40) eine mit dem verschiebbaren Schlitten (40) verbundene Zahnstange (50) umfasst, die mit einem elektromotorisch, hydraulisch oder pneumatisch betriebenem Antriebszahnrad (48) in Verzahnungseingriff steht, oder wobei dem Schlitten (40) ein mittels Zahnstange (50) angetriebenes Antriebszahnrad (48) zugeordnet ist, das mit der Zahnstange (50) in Verzahnungseingriff steht oder
- wobei der motorische Antrieb des Schlittens (40) einen mit dem verschiebbaren Schlitten (40) gekoppelten Linearantrieb umfasst, welcher Linearantrieb einen elektromotorischen Antrieb oder einen fluidischen Antrieb umfasst oder
- wobei der motorische Antrieb (42) des Schlittens (40) einen mit dem verschiebbaren Schlitten (40) verbundenen Seilzugantrieb umfasst, der mittels wenigstens eines elektromotorischen Antriebs betätigt wird.

8. Verfahren nach Anspruch 7, bei dem die Messerkassette (38) in ihrer von der Betriebsposition entfernten Serviceposition zu Wartungs-, Service- und/oder Reparaturzwecken aus der Halmgutpresse (10) entnehmbar und/oder von dieser trennbar ist.

9. Verfahren nach Anspruch 7 oder 8, bei dem die Messerkassette (38) in linearer Bewegungsrichtung (36) zwischen zwei Endlagen bewegt werden kann, wobei die erste Endlage die Betriebsposition bildet, bei welcher die Schneidmesser sich in schneidendem Eingriff mit der rotierenden Messerwalze befinden, und wobei die zweite Endlage die Serviceposition bildet, in welcher die Messerkassette (38) zu Zwecken der Wartung, des Service und/oder der Reparatur aus der Halmgutpresse (10) entnehmbar und/oder von dieser trennbar ist.

## Claims

1. An agricultural stalk press (10) for pressing bales or big bales, in particular, cuboid-shaped bales or big bales, the stalk press (10) being provided with a pick-up device (20) for picking up harvested material, with a cutting module (30) for shredding the harvested material, the cutting module (30) arranged downstream of the pick-up device (20) in the conveying direction (28) of the harvested material, with a pressing device for pressing the harvested material into bales of a defined size, the pressing device being arranged downstream of the cutting module (30), wherein a binder device is assigned to the pressing device, which binder device wraps twine around a finished pressed bale or big bale and knots the twine, and, arranged downstream of the pressing device, a conveying device and/or depositing device (32) for ejecting finished pressed bales or big bales bound with twine,
- wherein the cutting module (30) comprises at least one blade cassette (38), which is removable from the stalk press (10) in a transverse direction to a longitudinal central axis (22) of the stalk press (10) and which has a multitude of cutting blades attached or mounted thereto, and a rotating blade roller in cutting engagement with the cutting blades of the blade cassette (38),
**characterised in that** the blade cassette (38) with the multitude of cutting blades is assigned a motor actuator (42), which can move the blade cassette (38) between an operating position within the stalk press (10) and a service position moved out of the stalk press (10),
- in which service position the blade cassette (38) is movable between the two end positions by means of a motor-actuated, shiftable carriage (40) in the direction of movement (36) transverse to the longitudinal central axis (22) of the stalk press (10),
- wherein the motor actuator (42) of the carriage (40) comprises a gear rack (50) connected to the shiftable carriage (40), which gear rack (50) is in meshing engagement with an electromotively, hydraulically, or pneumatically operated input gear wheel (48), or wherein an input gear wheel (48) actuated by means of a gear rack (50) is assigned to the carriage (40), which input gear wheel (48) is in meshing engagement with the gear rack (50), or
- wherein the motor actuator of the carriage (40) comprises a linear actuator coupled with the shiftable carriage (40), which linear actuator comprises an electric motor actuator or a fluid actuator, or
- wherein the motor actuator (42) of the carriage (40) comprises a cable actuator connected to the shiftable carriage (40), which cable actuator is actuated by means of at least one electric motor actuator.

2. The agricultural stalk press according to claim 1, in which the multitude of cutting blades of the blade cassette (38) in their operating position are in cutting engagement with the rotating blade roller mounted fixedly within a housing of the stalk press (10).

3. The agricultural stalk press according to claim 1 or 2, which is not ready for operation and/or is deactivated in the service position of the blade cassette (38), wherein the blade cassette (38) in the service position, which is moved away from the operating position, is removable from and/or separable from the stalk press (10) for purposes of maintenance, service, and/or repair.

4. The agricultural stalk press according to one of the claims 1 to 3, in which the blade cassette (38) is movable in a linear direction of movement (36) between two end positions, wherein the first end position forms the operating position, in which the cutting blades are in cutting engagement with the rotating blade roller (38), and wherein the second end position forms the service position, in which the blade cassette (38) is removable from and/or separable from the stalk press (10) for purposes of maintenance, service, and/or repair.

5. The agricultural stalk press according to claim 1, alternative 2, in which the fluid actuator forming the linear actuator comprises at least one double-acting cylinder operating with hydraulic pressure.

6. The agricultural stalk press according to claim 1, alternative 2, in which the fluid actuator forming the linear actuator comprises at least one double-acting cylinder operating with pneumatic pressure.

7. A method for handling a cutting module (30), which is removable from an agricultural stalk press (10), which cutting module (30) is, in particular, removable from and insertable into an agricultural stalk press (10) according to one of the claims 1 to 13, which stalk press (10) serves for pressing bales or big bales, in particular, cuboid-shaped bales or big bales, and which stalk press (10) comprises a pick-up device (20) for picking up harvested material, a cutting module (30) for shredding the harvested material, the cutting module (30) arranged downstream of the pick-up device (20) in the conveying direction (28) of the harvested material, and a pressing device for pressing the harvested material into bales of a defined size, the pressing device being arranged downstream of the cutting module (30), wherein a binder device is furthermore assigned to the pressing device, which binder device wraps twine around a finished pressed bale or big bale and knots the twine, and which stalk press is equipped with a conveying device and/or depositing device (32) for ejecting finished pressed bales or big bales bound with twine, the conveying device and/or depositing device (32) being arranged downstream of the pressing device,
- wherein the cutting module (30) comprises at least one blade cassette (38), which is removable from the stalk press (10) in a transverse direction to a longitudinal central axis (22) of the stalk press (10) and which has a multitude of cutting blades attached or mounted thereto, and a rotating blade roller in cutting engagement with the cutting blades of the blade cassette (38),
**characterised in that** the blade cassette (38) with the multitude of cutting blades can be moved by means of a motorised motor-actuated shiftable carriage (40) in the direction of movement (36) transverse to the longitudinal central axis (22) of the stalk press (10) between an operating position within the stalk press (10) and a service position moved out of the stalk press (10);
- wherein the motor actuator (42) of the carriage (40) comprises a gear rack (50) connected to the shiftable carriage (40), which gear rack (50) is in meshing engagement with an electromotively, hydraulically, or pneumatically operated input gear wheel (48), or wherein an input gear wheel (48) driven by means of a gear rack (50) is assigned to the carriage (40), which input gear wheel (48) is in meshing engagement with the gear rack (50), or
- wherein the motor actuator of the carriage (40) comprises a linear actuator coupled with the shiftable carriage (40), which linear actuator comprises an electric motor actuator or a fluid actuator, or
- wherein the motor actuator (42) of the carriage (40) comprises a cable actuator connected to the shiftable carriage (40), which cable actuator is actuated by means of at least one electric motor actuator.

8. The method according to claim 7, in which the blade cassette (38) in the service position, which is moved away from the operating position, is removable from and/or separable from the stalk press (10) for purposes of maintenance, service, and/or repair.

9. The method according to claim 7 or 8, in which the blade cassette (38) can be moved in a linear direction of movement (36) between two end positions, wherein the first end position forms the operating position, in which the cutting blades are in cutting engagement with the rotating blade roller, and wherein the second end position forms the service position, in which the blade cassette (38) is removable from and/or separable from the stalk press (10) for purposes of maintenance, service, and/or repair.

## Revendications

1. Presse agricole de produits en tige (10) destinée à presser des balles ou de grosses balles, en particulier en forme de parallélépipède rectangle, avec un dispositif de réception (20) destiné à recevoir de la récolte, avec un module de coupe (30) qui est disposé en aval du dispositif de réception (20) dans la direction de transport (28) de la récolte et destiné à broyer la récolte, avec un dispositif de pressage qui est disposé en aval dudit module de coupe (30) et destiné à presser la récolte en balles de taille définie, dans lequel audit dispositif de pressage est associé un dispositif de liage qui place de la ficelle autour d'une balle ou grosse balle finie et noue celle-ci, ainsi qu'avec un dispositif de transport et/ou de dépôt (32) qui est disposé en aval du dispositif de pressage et destiné à éjecter des balles et grosses balles finies et enveloppées de ficelle,
- dans laquelle le module de coupe (30) comprend au moins une cassette à couteaux (38) qui peut être retirée de la presse de produits en tige (10) dans une direction transversale par rapport à un axe central longitudinal (22) de la presse de produits en tige (10) et qui présente une pluralité de couteaux y fixés ou logés, ainsi qu'un tambour de coupe rotatif qui est en prise coupante avec les couteaux de la cassette à couteaux (38),
**caractérisée par le fait qu'**à la cassette à couteaux (38) comprenant la pluralité de couteaux est associé un mécanisme d'entraînement par moteur (42) qui peut déplacer la cassette à couteaux (38) entre une position de fonctionnement à l'intérieur de la presse de produits en tiges (10) et une position de service où elle est sortie de la presse de produits en tige (10),
- dans laquelle la cassette à couteaux (38) peut être déplacée entre les deux positions extrêmes dans la direction de déplacement (36) transversalement à l'axe central longitudinal (22) de la presse de produits en tige (10) au moyen d'un chariot déplaçable (40) entraîné par moteur,
- dans laquelle le mécanisme d'entraînement par moteur (42) du chariot (40) comprend une crémaillère (50) qui est reliée au chariot déplaçable (40) et qui est engrenée avec une roue dentée motrice (48) actionnée par moteur électrique, de manière hydraulique ou pneumatique, ou dans laquelle audit chariot (40) est associée une roue dentée motrice (48) qui est entraînée au moyen d'une crémaillère (50) et qui est engrenée avec la crémaillère (50), ou
- dans laquelle le mécanisme d'entraînement par moteur du chariot (40) comprend un entraînement linéaire couplé au chariot déplaçable (40), lequel entraînement linéaire comprend un mécanisme d'entraînement par moteur électrique ou un entraînement fluidique ou
- dans laquelle le mécanisme d'entraînement par moteur (42) du chariot (40) comprend un entraînement par câble de commande qui est relié au chariot déplaçable (40) et est actionné au moyen d'au moins un mécanisme d'entraînement par moteur électrique.

2. Presse agricole de produits en tige selon la revendication 1, dans laquelle la pluralité de couteaux de la cassette à couteaux (38) sont, dans la position de fonctionnement de celle-ci, en prise coupante avec le tambour de coupe rotatif qui est logé de manière fixe à l'intérieur d'un boîtier de la presse de produits en tige (10).

3. Presse agricole de produits en tige selon la revendication 1 ou 2, qui n'est pas prête à fonctionner et/ou est désactivée dans la position de service de la cassette à couteaux (38), dans laquelle, dans la position de service éloignée de la position de fonctionnement, la cassette à couteaux (38) peut être retirée de la presse de produits en tige (10) et/ou séparée de celle-ci à des fins d'entretien, de service et/ou de réparation.

4. Presse agricole de produits en tige selon l'une quelconque des revendications 1 à 3, dans laquelle la cassette à couteaux (38) est déplaçable suivant une direction de déplacement linéaire (36) entre deux positions extrêmes, dans laquelle la première position extrême forme la position de fonctionnement dans laquelle les couteaux sont en prise coupante avec le tambour de coupe rotatif (38), et dans laquelle la deuxième position extrême forme la position de service dans laquelle la cassette à couteaux (38) peut être retirée de la presse de produits en tige (10) et/ou séparée de celle-ci à des fins d'entretien, de service et/ou de réparation.

5. Presse agricole de produits en tige (10) selon la revendication 1 alternative 2, dans laquelle l'entraînement fluidique formant l'entraînement linéaire comprend au moins un vérin double effet fonctionnant à pression hydraulique.

6. Presse agricole de produits en tige (10) selon la revendication 1 alternative 2, dans laquelle l'entraînement fluidique formant l'entraînement linéaire comprend au moins un vérin double effet fonctionnant à pression pneumatique.

7. Procédé de manipulation d'un module de coupe (30) apte à être retiré d'une presse agricole de produits en tige (10), qui peut être retiré en particulier d'une presse agricole de produits en tige (10) selon l'une quelconque des revendications 1 à 13 et y être inséré, laquelle presse agricole de produits en tige (10) sert à presser des balles ou de grosses balles, en particulier en forme de parallélépipède rectangle, et laquelle presse agricole de produits en tige (10) comprend un dispositif de réception (20) destiné à recevoir de la récolte, un module de coupe (30) qui est disposé en aval du dispositif de réception (20) dans la direction de transport (28) de la récolte et destiné à broyer la récolte ainsi qu'un dispositif de pressage qui est disposé en aval dudit module de coupe (30) et destiné à presser la récolte en balles de taille définie, dans lequel audit dispositif de pressage est associé en outre un dispositif de liage qui place de la ficelle autour d'une balle ou grosse balle finie et noue celle-ci, et laquelle presse de produits en tige est équipée d'un dispositif de transport et/ou de dépôt (32) qui est disposé en aval du dispositif de pressage et destiné à éjecter des balles et grosses balles finies et enveloppées de ficelle,
- dans lequel le module de coupe (30) comprend au moins une cassette à couteaux (38) qui peut être retirée de la presse de produits en tige (10) dans une direction transversale par rapport à un axe central longitudinal (22) de la presse de produits en tige (10) et qui présente une pluralité de couteaux y fixés ou logés, ainsi qu'un tambour de coupe rotatif qui est en prise coupante avec les couteaux de la cassette à couteaux (38),
**caractérisé par le fait que** la cassette à couteaux (38) comprenant la pluralité de couteaux peut être déplacée au moyen d'un chariot déplaçable (40) entraîné par moteur, dans la direction de déplacement (36) transversalement à l'axe central longitudinal (22) de la presse de produits en tige (10), entre une position de fonctionnement à l'intérieur de la presse de produits en tige (10) et une position de service où elle est sortie de la presse de produits en tige (10);
- dans lequel le mécanisme d'entraînement par moteur (42) du chariot (40) comprend une crémaillère (50) qui est reliée au chariot déplaçable (40) et qui est engrenée avec une roue dentée motrice (48) actionnée par moteur électrique, de manière hydraulique ou pneumatique, ou dans lequel audit chariot (40) est associée une roue dentée motrice (48) qui est entraînée au moyen d'une crémaillère (50) et qui est engrenée avec la crémaillère (50), ou
- dans lequel le mécanisme d'entraînement par moteur du chariot (40) comprend un entraînement linéaire couplé au chariot déplaçable (40), lequel entraînement linéaire comprend un mécanisme d'entraînement par moteur électrique ou un entraînement fluidique ou
- dans lequel le mécanisme d'entraînement par moteur (42) du chariot (40) comprend un entraînement par câble de commande qui est relié au chariot déplaçable (40) et est actionné au moyen d'au moins un mécanisme d'entraînement par moteur électrique.

8. Procédé selon la revendication 7, dans lequel, dans sa position de service éloignée de la position de fonctionnement, la cassette à couteaux (38) peut être retirée de la presse de produits en tige (10) et/ou séparée de celle-ci à des fins d'entretien, de service et/ou de réparation.

9. Procédé selon la revendication 7 ou 8, dans lequel la cassette à couteaux (38) peut être déplacée suivant une direction de déplacement linéaire (36) entre deux positions extrêmes, dans laquelle la première position extrême forme la position de fonctionnement dans laquelle les couteaux sont en prise coupante avec tambour de coupe rotatif, et dans lequel la deuxième position extrême forme la position de service dans laquelle la cassette à couteaux (38) peut être retirée de la presse de produits en tige (10) et/ou séparée de celle-ci à des fins d'entretien, de service et/ou de réparation.
